(19) Europäisches Patentamt
European Patent Office
Office européen des brevets

(11) **EP 4 571 880 A1**

(12) **EUROPEAN PATENT APPLICATION**
published in accordance with Art. 153(4) EPC

(43) Date of publication:
**18.06.2025 Bulletin 2025/25**

(21) Application number: **24738715.2**

(22) Date of filing: **03.01.2024**

(51) International Patent Classification (IPC):
*H01M 4/36* (2006.01)    *H01M 4/525* (2010.01)
*H01M 4/505* (2010.01)    *H01M 4/46* (2006.01)
*H01M 4/131* (2010.01)    *H01M 10/052* (2010.01)
*H01M 4/02* (2006.01)

(52) Cooperative Patent Classification (CPC):
C01G 53/00; H01M 4/02; H01M 4/131;
H01M 4/1391; H01M 4/36; H01M 4/46;
H01M 4/505; H01M 4/525; H01M 4/62;
H01M 10/052; Y02E 60/10

(86) International application number:
**PCT/KR2024/000143**

(87) International publication number:
**WO 2024/147645 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2023 JP 2023001342**

(71) Applicant: **LG Energy Solution, Ltd.
Seoul 07335 (KR)**

(72) Inventor: **CHIHARA, Kuniko
Yokohama-shi, Kanagawa 220--0011 (JP)**

(74) Representative: **Hoffmann Eitle
Patent- und Rechtsanwälte PartmbB
Arabellastraße 30
81925 München (DE)**

(54) **POSITIVE ELECTRODE ACTIVE MATERIAL, POSITIVE ELECTRODE ACTIVE MATERIAL SLURRY, POSITIVE ELECTRODE, LITHIUM ION SECONDARY BATTERY, AND METHOD FOR PREPARING POSITIVE ELECTRODE ACTIVE MATERIAL**

(57)    The objective of the present invention is to provide a positive electrode active material for ensuring excellent cycle characteristics or electrode resistance characteristics, a positive electrode active material slurry, a positive electrode, a lithium ion secondary battery, and a method for preparing a positive electrode active material. A positive electrode active material according to an embodiment contains a mixture of lithium transition metal oxide particles and magnesium fluoride particles and shows a peak at 685 eV to 687 eV in the spectrum of fluorine 1s electrons, as observed by X-ray photoelectron spectroscopy.

FIG. 1

EP 4 571 880 A1

# EP 4 571 880 A1

## Description

<u>TECHNICAL FIELD</u>

Embodiments of the present disclosure relate to a positive electrode active material, a positive electrode active material slurry, a positive electrode, a lithium ion secondary battery and a method for preparing a positive electrode active material.

The present application claims priority to Japanese Patent Application No. 2023-001342 filed on January 6, 2023, the disclosure of which is incorporated herein by reference.

<u>BACKGROUND</u>

With the technology development of mobile devices, there is a growing demand for secondary batteries as an energy source. Among secondary batteries, lithium ion secondary batteries having high energy density and voltage, long cycle life and low self-discharge rate are commercialized and widely used. Currently, many studies are being conducted to increase the capacity of lithium ion secondary batteries.

In the trend towards higher capacity of lithium ion secondary batteries, in order to improve stability (cycling characteristics) of batteries, for example, technology forms a thin film of fluorine-based material on the surface of an electrode active material is known (see Patent Literature 1).

Patent Literature 1: Japanese Patent Publication No. 2018-063835

<u>SUMMARY</u>

<u>Technical Problem</u>

However, when the thin film is formed, sufficient electrode resistance characteristics may not be obtained. That is, the electrode resistance characteristics may degrade (i.e., the electrode resistance may increase) by the thin film having low conductivity. Accordingly, both the outstanding cycling characteristics and electrode resistance characteristics are required.

The present disclosure is directed to providing a positive electrode active material, a positive electrode active material slurry, a positive electrode, a lithium ion secondary battery and a method for preparing a positive electrode active material with the outstanding cycling characteristics and electrode resistance characteristics.

<u>Technical Solution</u>

The present disclosure may include the following embodiments.

[1] A positive electrode active material including a mixture of lithium transition metal oxide particles and magnesium fluoride particles, wherein a 1s electron spectrum for fluorine observed by X-ray photoelectron spectroscopy analysis has a peak at 685 eV or more and 687 eV or less.
[2] The positive electrode active material defined in [1], wherein the lithium transition metal oxide particles do not have a thin film of the magnesium fluoride.
[3] The positive electrode active material defined in [1] or [2], wherein the magnesium fluoride particles are not sintered with the lithium transition metal oxide particles.
[4] The positive electrode active material defined in any one of [1] to [3], wherein the magnesium fluoride particles are included in an amount of 0.02 parts by mass or more and 1 part by mass or less based on 100 parts by mass of the lithium transition metal oxide particles.
[5] The positive electrode active material defined in any one of [1] to [4], wherein the lithium transition metal oxide includes nickel.
[6] The positive electrode active material defined in any one of [1] to [5], wherein the lithium transition metal oxide is represented by $Li_aNi_xM_yO_2$ (0 < a≤1.05, x+y=1, 0.4≤x≤1, M is at least one type of metal other than Ni).
[7] The positive electrode active material defined in any one of [1] to [6], wherein when comparing a first lithium ion secondary battery manufactured using a positive electrode including a positive electrode active material layer including 96.5 parts by mass of the positive electrode active material, 1.5 parts by mass of carbon black and 2 parts by mass of polyvinylidene fluoride on a current collector and a negative electrode including graphite with a second lithium ion secondary battery manufactured in a same condition as the first lithium ion secondary battery except that a positive electrode active material obtained by sintering the positive electrode active material at 350°C for 5 hours was used instead of the positive electrode active material, the first lithium ion secondary battery has a larger value obtained

2

by dividing a discharge capacity in a 100th charge/discharge cycle by a discharge capacity in a first charge/discharge cycle than the second lithium ion secondary battery.

[8] A positive electrode active material slurry including the positive electrode active material defined in any one of [1] to [7].

[9] A positive electrode comprising a current collector, and a positive electrode active material layer including the positive electrode active material defined in any one of [1] to [7] on the current collector.

[10] A lithium ion secondary battery comprising the positive electrode defined in [9].

[11] A method for preparing a positive electrode active material, comprising mixing lithium transition metal oxide particles with magnesium fluoride particles, wherein a 1s electron spectrum for fluorine observed by X-ray photoelectron spectroscopy analysis of the positive electrode active material has a peak at 685 eV or more and 687 eV or less.

[12] The method for preparing the positive electrode active material defined in [11], wherein the method does not include sintering a mixture of the lithium transition metal oxide particles and the magnesium fluoride particles.

[13] The method for preparing the positive electrode active material defined in [11] or [12], wherein the positive electrode active material includes the mixture of the lithium transition metal oxide particles and the magnesium fluoride particles.

## Advantageous Effects

According to the present disclosure, it may be possible to provide the positive electrode active material, the positive electrode active material slurry, the positive electrode, the lithium ion secondary battery and the method for preparing the positive electrode active material with the outstanding cycling characteristics and electrode resistance characteristics.

## BRIEF DESCRIPTION OF THE DRAWINGS

FIG. 1 shows 1s electron X-ray photoelectron spectroscopy (XPS) spectra for fluorine of positive electrode active materials according to Example 1-1, Comparative Example 1-1 and Comparative Example 2-1.

FIG. 2 shows 2p electron XPS spectra for magnesium of positive electrode active materials according to Example 1-1, Comparative Example 1-1 and Comparative Example 2-1.

FIG. 3 shows changes in capacity retention over first to 300th charge and discharge in monocell batteries according to Examples and Comparative Examples.

FIG. 4 shows changes in direct current resistance over first to 300th charge and discharge in monocell batteries according to Example 1-1, Comparative Example 1-1 and Comparative Example 2-1.

## DETAILED DESCRIPTION

Hereinafter, a positive electrode active material, a positive electrode active material slurry, a positive electrode, a lithium ion secondary battery and a method for preparing a positive electrode active material according to embodiments will be described. Meanwhile, the following embodiment represents an embodiment of the present disclosure and is not intended to limit the present disclosure, and may be arbitrarily changed within the scope of technical aspect of the present disclosure. Each element and each feature of the embodiment may be arbitrarily combined. When a plurality of numerical ranges is listed below, upper and lower limits of each numerical range may be arbitrarily combined.

The problem with electrode resistance characteristics that may arise from higher capacity of lithium ion secondary batteries will be described, taking a lithium ion secondary battery using lithium transition metal oxide having high nickel content as a positive electrode material as an example.

As the positive electrode material of the lithium ion secondary battery, in a lithium nickel cobalt manganese three-component positive electrode active material such as $LiaNixCoyMnzO2$, it is known that high nickel content in the composition contributes to high capacity. In practice, higher capacity of the lithium ion secondary battery is always required in the market, and many efforts are devoted to developing Ni rich positive electrode active materials having high capacity per unit mass in an operating voltage range of between 3.0 V and 4.2 V as an alternative to $LiCoO2$. However, in the lithium nickel cobalt manganese three-component positive electrode active material, problems occur, for example, gases generation at high temperature or low stability in charged state with the increasing Ni content. The use in battery applications is challenging.

To solve this problem, a method that forms an insulating thin film on the surface of positive electrode active material particles is suggested to improve stability during charging. Meanwhile, there are not so many reports about the means for suppressing gas generation, but Patent Literature 1 discloses forming a fluoride-based thin film on the surface of Li-excess layered rocksalt-type positive electrode active material. However, the surface of the Ni rich positive electrode material is easily influenced by ionic conductivity or electron conduction. For this reason, the Ni rich positive electrode active material is greatly influenced by the increase in resistance component resulting from the thin film formation.

The inventors found that lithium ion secondary batteries having the outstanding cycling characteristics and electrode resistance characteristics are obtained by using the positive electrode active material including a mixture of lithium transition metal oxide particles and magnesium fluoride particles, and completed the present disclosure.

[Positive electrode active material]

According to an embodiment, there is a positive electrode active material including a mixture of lithium transition metal oxide particles and magnesium fluoride particles, wherein a 1s electron spectrum for fluorine observed by X-ray photoelectron spectroscopy analysis has a peak at 685 eV or more and 687 eV or less. Preferably, the positive electrode active material is a positive electrode active material for a lithium ion secondary battery.

The 'lithium transition metal oxide' as used herein refers to a compound including lithium and transition metal, and having transition metal-oxygen bonds, and includes those including a metal such as aluminum or a nonmetal such as iodine other than oxygen. The 'mixture' as used herein refers to two or more materials simply mixed together, wherein the majority of the two or more materials (for example, 50 mass% or more) does not change in chemical state by chemical reaction between the two or more materials or sintering.

The positive electrode active material includes lithium transition metal oxide capable of intercalating and deintercalating lithium and magnesium fluoride. The positive electrode active material may be a physical mixture of lithium transition metal oxide particles and magnesium fluoride particles. Meanwhile, the positive electrode active material may include lithium transition metal oxide and any material other than magnesium fluoride. For example, the positive electrode active material may or may not include a fluorine-containing material other than magnesium fluoride, such as lithium fluoride, aluminum fluoride.

(Lithium transition metal oxide)

The lithium transition metal oxide particles may exist as primary particles, or agglomerates of primary particles. The particle size may be, for example, 10 nm or more and 100 $\mu$m or less, 0.1 $\mu$m or more and 10 $\mu$m or less, but is not limited thereto.

The lithium transition metal oxide includes, for example, nickel. Preferably, the lithium transition metal oxide may be a nickel-rich lithium transition metal oxide. Here, 'nickel-rich' refers to 50 mol% or more of nickel based on the total amount of transition metal. As described above, the nickel-rich lithium transition metal oxide including, for example, 50 mol% or more of nickel requires improved stability (i.e., cycling characteristics) during charging. For this reason, improvement in cycling characteristics using the positive electrode active material according to this embodiment may contribute to high capacity and improved cycling characteristics of the lithium ion secondary battery. For example, the lithium transition metal oxide may include 60 mol% or more, 70 mol% or more, 80 mol% or more, or 90 mol% or more of nickel based on the total amount of transition metal. For example, the lithium transition metal oxide is represented by $Li_aNi_xM_yO_2$ ($0 < a \leq 1.05$, $x+y=1$, $0.4 \leq x \leq 1$, M is at least one type of metal other than Ni).

Examples of the lithium transition metal oxide may include lithium-manganese oxide (for example, $LiMnO_2$, $LiMnO_3$, $LiMn_2O_3$, $LiMn_2O_4$); lithium-cobalt oxide (for example, $LiCoO_2$); lithium-nickel oxide (for example, $LiNiO_2$); lithium-copper oxide (for example, $Li_2CuO_2$); lithium-vanadium oxide (for example, $LiV_3O_8$); lithium-nickel-manganese oxide (for example, $LiNi_{1-z}Mn_zO_2$ ($0 < z < 1$), $LiMn_{2-z}Ni_zO_4$ ($0 < z < 2$)); lithium-nickel-cobalt oxide (for example, $LiNi_{1-y}Co_yO_2$ ($0 < y < 1$)); lithium-manganese-cobalt oxide (for example, $LiCo_{1-z}Mn_zO_2$ ($0 < z < 1$), $LiMn_{2-y}Co_yO_4$ ($0 < y < 2$)); lithium-nickel-manganese-cobalt oxide (for example, $Li(Ni_xCo_yMn_z)O_2$ ($0 < x < 1$, $0 < y < 1$, $0 < z < 1$, $x+y+z=1$), $Li(Ni_xCo_yMn_z)O_4$ ($0 < x < 2$, $0 < y < 2$, $0 < z < 2$, $x+y+z=2$)); lithium-nickel-cobalt-metal (M) oxide (for example, $Li(Ni_xCo_yMn_zM_w)O_2$ (M is selected from the group consisting of Al, Fe, V, Cr, Ti, Ta, Mg and Mo, $0 < x < 1$, $0 < y < 1$, $0 < z < 1$, $0 < w < 1$, $x+y+z+w=1$)); Li-excess solid solution positive electrode (for example, $pLi_2MnO_3$-$(1-p)Li(Ni_xCo_yMn_z)O_2$ ($0 < x < 1$, $0 < y < 1$, $0 < z < 1$, $x+y+z=1$, $0 < p < 1$); compounds with substitution of other one or two or more metals for transition metal in these compounds. The positive electrode active material layer may include any one of them or a compound of two or more of them, but is not limited thereto.

In particular, examples of the nickel-rich lithium transition metal oxide that is effective in increasing the capacity of the battery may include $Li_aNiO_2$ ($0.5 \leq a \leq 1.5$); $Li_a(Ni_xCo_yMn_z)O_2$ ($0.5 \leq a \leq 1.5$, $0.5 \leq x < 1$, $0 < y < 0.5$, $0 < z < 0.5$, $x+y+z=1$); $Li_a(Ni_xCo_yMn_z)O_2$ ($0.7 \leq x < 1$, $0 < y < 0.3$, $0 < z < 0.3$, $x+y+z=1$); $Li_a(Ni_xCo_yMn_z)O_2$ ($0.8 \leq x < 1$, $0 < y < 0.2$, $0 < z < 0.2$, $x+y+z=1$); $Li_a(Ni_xCo_yMn_z)O_2$ ($0.9 \leq x < 1$, $0 < y < 0.1$, $0 < z < 0.1$, $x+y+z=1$); $Li_aNi_{1-y}Co_yO_2$ ($0.5 \leq a \leq 1.5$, $0 < y \leq 0.5$); $Li_aNi_{1-z}Mn_zO_2$ ($0.5 \leq a \leq 1.5$, $0 < z \leq 0.5$); $Li_a(Ni_xCo_yMn_z)O_4$ ($0.5 \leq a \leq 1.5$, $1 \leq x < 2$, $0 < y < 1$, $0 < z < 1$, $x+y+z=2$); $Li_a(Ni_xCo_yM_w)O_2$ (M is at least one selected from the group consisting of Al, Fe, V, Cr, Ti, Ta, Mg, Mo, Zr, Zn, Ga and In, $0.5 \leq a \leq 1.5$, $0.5 < x < 1$, $0 < y < 0.5$, $0 <$

w < 0.5, x+y+w=1); $Li_a(Ni_xCo_yMn_zM_w)O_2$ (M is at least one selected from the group consisting of Al, Fe, V, Cr, Ti, Ta, Mg, Mo, Zr, Zn, Ga and In, $0.5 \leq a \leq 1.5$, $0.5 \leq x < 1$, $0 < y < 0.5$, $0 < z < 0.5$, $0 < w < 0.5$, x+y+z+w=1); compounds with substitution of at least one other type of metal (for example, at least one of Al, Fe, V, Cr, Ti, Ta, Mg, Mo, Zr, Zn, Ga or In) for transition metal atoms in these compounds in at least part; compounds with partial substitution of at least one other type nonmetal (for example, at least one of P, F, S or N) for oxygen atoms in these compounds. Preferably, the lithium transition metal oxide is represented by $Li_aNi_xM_yO_2$ (M is at least one metal other than Ni, for example, at least one selected from the group consisting of Al, Fe, Co, Mn, V, Cr, Ti, Ta, Mg, Mo, Zr, Zn, Ga and In, $0 < a \leq 1.05$, x+y=1), wherein a value of x may be, for example, 0.3 or more, 0.4 or more, 0.5 or more, 0.6 or more, 0.7 or more, 0.8 or more or 0.9 or more, and for example 1 or less, 0.9 or less, 0.8 or less, 0.7 or less, 0.6 or less or 0.5 or less. The positive electrode active material may include at least one of them, but is not limited thereto. Additionally, even in the same particle, there may be a distribution in substitution concentration between inside and surface. Additionally, the particle surface may have coating. For example, the surface may be coated with metal oxide, lithium transition metal oxide or polymer, but is not limited thereto.

In particular, in terms of improvement in capacity characteristics and stability of the battery, $Li_aNiO_2$, $Li_a(Ni_{0.5}Mn_yCo_z)O_2(y+z=0.5)$, $Li_a(Ni_{0.6}Mn_yCo_z)O_2(y+z=0.4)$, $Li_a(Ni_{0.7}Mn_yCo_z)O_2(y+z=0.3)$, $Li_a(Ni_{0.8}Mn_yCo_z)O_2(y+z=0.2)$, $Li_a(Ni_{0.8}Co_yMn_zAl_w)O_2(y+z+w=0.2)$, $Li_a(Ni_{0.85}Co_yMn_z)O_2(y+z=0.15)$, $Li_a(Ni_{0.85}Co_yMn_zAl_w)O_2(y+z+w=0.15)$, $Li_a(Ni_{0.9}CO_yMn_z)O_2(y+z=0.1)$, $Li_a(Ni_{0.9}CO_yMn_zAl_w)O_2(y+z+w=0.1)$, $Li_a(Ni_{0.9}CO_yMn_z)O_2(y+z=0.1)$ or $Li_a(Ni_{0.95}Co_yMn_zAl_w)O_2(y+z+w=0.05)$ is preferred. Here, a value of a may be, for example, $0.5 \leq a \leq 1.5$, and preferably $1.0 \leq a \leq 1.5$.

More specifically, $LiNiO_2$, $Li(Ni_{0.5}Mn_{0.3}Co_{0.2})O_2$, $Li(Ni_{0.6}Mn_{0.2}Co_{0.2})O_2$, $Li(Ni_{0.7}Mn_{0.15}Co_{0.15})O_2$, $Li(Ni_{0.8}Mn_{0.1}Co_{0.1})O_2$, $Li(Ni_{0.8}Co_{0.15}Al_{0.05})O_2$, $Li(Ni_{0.8}Co_{0.1}Mn_{0.05}Al_{0.05})O_2$, $Li(Ni_{0.85}Co_{0.10}Mn_{0.05})O_2$, $Li(Ni_{0.85}Co_{0.10}Mn_{0.03}Al_{0.02})O_2$, $Li(Ni_{0.9}CO_{0.05}Mn_{0.05})O_2$, $Li(Ni_{0.9}Co_{0.05}Al_{0.05})O_2$, $Li(Ni_{0.95}Co_{0.03}Mn_{0.02})O_2$ or $Li(Ni_{0.95}Co_{0.03}Al_{0.02})O$; is preferred.

(Magnesium fluoride)

The magnesium fluoride included in the positive electrode active material exists in the form of particles in at least part. Preferably, the magnesium fluoride is in the form of particles that are independent from the lithium transition metal oxide particles, but not a thin film that covers the lithium transition metal oxide particles. For example, the magnesium fluoride particles are in contact with the surface of the lithium transition metal oxide particles. That is, the surface of the lithium transition metal oxide particles is exposed and come into contact with the magnesium fluoride particles that are independent from the lithium transition metal oxide particles. Preferably, the thin film of magnesium fluoride is not formed on the surface of the lithium transition metal oxide particles to suppress the increase in surface resistance of the lithium transition metal oxide particles due to the thin film. Preferably, there is no chemical bond between the lithium transition metal oxide particles and the magnesium fluoride particles. Preferably, the magnesium fluoride particles are not sintered with the lithium transition metal oxide particles. Here, 'sinter' refers to heating at least one material to lower temperature than the melting point of the material in a state that the particles of the material are in contact with each other, in order to hold the adjacent particles together.

The magnesium fluoride particles may exist as primary particles, or secondary particles, i.e., agglomerates of primary particles. The particle size may be, for example, 1 nm or more and 100 $\mu$m or less, 10 nm or more and 10 $\mu$m or less, 100 nm or more and 1 $\mu$m or less, but is not limited thereto.

In the positive electrode active material, the amount of the magnesium fluoride is, for example, 0.02 parts by mass or more and 1 part by mass or less based on 100 parts by mass of the lithium transition metal oxide. When the amount of the magnesium fluoride is equal to or more than 0.02 parts by mass, improved cycling characteristics by the magnesium fluoride are expected. When the amount of the magnesium fluoride is equal to or less than 1 part by mass, the increase in electrode resistance will be suppressed by excess magnesium fluoride covering the surface of the lithium transition metal oxide particles. The amount of the magnesium fluoride is preferably 0.03 parts by mass or more and 0.5 parts by mass or less, more preferably 0.04 parts by mass or more and 0.3 parts by mass or less, and more preferably 0.05 parts by mass or more and 0.2 parts by mass or less, based on 100 parts by mass of the lithium transition metal oxide.

(X-ray photoelectron spectroscopy (XPS) spectrum of positive electrode active material)

XPS analysis is the technique that detects photoelectrons emitted from the sample surface using an analyzer by soft X-ray irradiation onto the surface in an ultrahigh vacuum. From the fact that the length (the mean free path) of travel of a photoelectron in the material is a few nm, the detection depth of the analysis method is a few nm. The element information of surface is obtained from the binding energy value of a bound electron in the material, and information associated with valence or coupled state is obtained from the energy shift of each peak. The ratio of elements (composition) may be quantitatively evaluated from the peak area ratio.

The spectrum observed by X-ray photoelectron spectroscopy analysis (XPS) of the positive electrode active material has a peak derived from F1s electron of fluorine. When charge correction is performed with the energy of ... -(CH2) n- derived C1s peak top of 284.6 eV, the F1s electron spectrum for fluorine has the peak at 685 eV or more and 687 eV or less. The peak position is preferably 685.2 eV or more and 686 eV or less, and more preferably 685.3 eV or more and 685.7 eV or less. This peak is derived from 1s electron of fluoride ions in magnesium fluoride. Here, the 'peak position' refers to maximum peak position (energy).

The spectrum observed by X-ray photoelectron spectroscopy analysis (XPS) of the positive electrode active material has a peak derived from 2p electron of magnesium. When charge correction is performed with the energy of -(CH2)n- derived C1s peak top of 284.6 eV, the 2p electron spectrum for magnesium has the peak at 50 eV or more and 52 eV or less. The peak position is preferably 50.5 eV or more and 51.5 eV or less, and more preferably 50.8 eV or more and 51.2 eV or less. This peak is derived from 2p electron of magnesium ions in magnesium fluoride.

(Effect of magnesium fluoride)

As described in the following embodiment, in case magnesium fluoride is added, it was confirmed that there was a tendency to suppress capacity fading and electrode resistance rise over the repeated charge and discharge, compared to non-addition of magnesium fluoride. Here, the capacity fading suppression refers to improvement in cycling characteristics, and the electrode resistance rise suppression refers to improvement in electrode resistance characteristics.

Additionally, when magnesium fluoride is added, in case sintering is not performed, it was confirmed that there was a tendency to suppress capacity fading and electrode resistance rise over the repeated charge and discharge, compared to non-sintering. For example, when comparing a first lithium ion secondary battery manufactured from the above-described positive electrode active material according to the manufacturing method described in Example 1-1 as described below with a second lithium ion secondary battery manufactured by the manufacturing method described in Comparative Example 2-1 as described below (i.e., the method using a positive electrode active material obtained by sintering the above-described positive electrode active material at 350°C for 5 hours, instead of the above-described positive electrode active material), the first lithium ion secondary battery has a larger value obtained by dividing the discharge capacity in n-th (for example, n=100) charge/discharge cycle by the discharge capacity in the first charge/discharge cycle than the second lithium ion secondary battery. Additionally, the first lithium ion secondary battery has a smaller value obtained by dividing direct current resistance in n-th (for example, n=100) charge/discharge cycle by direct current resistance in the first charge/discharge cycle than the second lithium ion secondary battery. More specifically, for example, when comparing the first lithium ion secondary battery manufactured using a positive electrode having the positive electrode active material layer including 96.5 parts by mass of the above-described positive electrode active material, 1.5 parts by mass of carbon black and 2 parts by mass of polyvinylidene fluoride on a current collector, and a negative electrode including graphite with the second lithium ion secondary battery manufactured in the same condition as the first lithium ion secondary battery except that the positive electrode active material obtained by sintering the positive electrode active material at 350°C for 5 hours was used instead of the above-described positive electrode active material, the first lithium ion secondary battery has a larger value obtained by dividing the discharge capacity in the 100th charge/discharge cycle by the discharge capacity in the first charge/discharge cycle than the second lithium ion secondary battery. Additionally, the first lithium ion secondary battery has a smaller value obtained by dividing direct current resistance in the 100th charge/discharge cycle by direct current resistance in the first charge/discharge cycle than the second lithium ion secondary battery.

Although it is not intended to constrain the present disclosure by theory, it is thought that the following mechanism may be one of the causes of this tendency. Regarding the cycling characteristics, there is a likelihood that at least part of the function of improve the cycling characteristics of the magnesium fluoride may disappear by decomposition of the magnesium fluoride by sintering, or reaction with the lithium transition metal oxide or the components in air. Regarding the electrode resistance characteristics, when the magnesium fluoride-derived thin film is formed on at least part of the surface of the lithium transition metal oxide particles by sintering, there is a likelihood that the surface resistance the lithium transition metal oxide particles may increase, compared to non-sintering. Additionally, when sintering is performed, Li residue such as lithium hydroxide present on the surface of the lithium transition metal oxide particles is changed to the resistance component such as lithium carbonate by sintering, which may adversely affect the characteristics, compared to non-sintering. Additionally, when the sintering process is not performed, side reaction in the sintering does not occur, and the cost does not increase.

[Method for preparing positive electrode active material]

According to an embodiment, there is provided a method for preparing a positive electrode active material, including the step of mixing lithium transition metal oxide particles with magnesium fluoride particles (a mixing step), wherein a 1s electron spectrum for fluorine observed by X-ray photoelectron spectroscopy analysis of the positive electrode active material has a peak at 685 eV or more and 687 eV or less. The 1s electron spectrum for fluorine observed by X-ray photoelectron spectroscopy analysis of the obtained positive electrode active material has the peak at 685 eV or more and 687 eV or less. The obtained positive electrode active material includes a mixture of lithium transition metal oxide particles and magnesium fluoride particles.

In the mixing step, the mixture including at least one type of lithium transition metal oxide and magnesium fluoride is prepared. For example, in the mixing process, the lithium transition metal oxide and the magnesium fluoride may be all mixed in solid state. For example, when the lithium transition metal oxide in powder state is mixed with the magnesium fluoride in powder state, the mixture in powder state is obtained. When the raw materials are mixed in solid state, the mixing process may be performed in a straightforward and convenient manner, it is possible to reduce the cost, and it is suitable for mass production. The mixing method is not limited to a particular one, and may include any existing method. Examples of the mixing method may include hand-operated mixing, a mortar (manual or automatic), a ball mill, a planetary mill, a vibration mill, a rotor mill, a hammer mill, a dispermill, a mixer, a homogenizer. The mixing step may be performed in air, and may be performed in any other atmosphere, for example, an inert atmosphere. The lithium transition metal oxide and any material other than the magnesium fluoride may be added. For example, any fluorine-containing material other than magnesium fluoride such as lithium fluoride or aluminum fluoride may be added, or may not be added.

The amount of the lithium transition metal oxide added in the mixing process is, for example, 85 parts by mass or more and 99.98 parts by mass or less, preferably 90 parts by mass or more and 99.9 parts by mass or less, and more preferably 95 parts by mass or more and 99.5 parts by mass or less, when the total mass of the mixture is 100 parts by mass.

The amount of the magnesium fluoride added is, for example, 0.02 parts by mass or more and 1 part by mass or less, preferably 0.03 parts by mass or more and 0.5 parts by mass or less, more preferably 0.04 parts by mass or more and 0.3 parts by mass or less, and more preferably 0.05 parts by mass or more and 0.2 parts by mass or less.

Preferably, the method does not include the step of sintering the mixture of the lithium transition metal oxide particles and the magnesium fluoride particles. For example, the method does not include the step of heating the mixture of the lithium transition metal oxide particles and the magnesium fluoride particles at or above a predetermined temperature. For example, the predetermined temperature is lower than the temperature at which the sintering of the lithium transition metal oxide particles or the remaining elements on the surface such as lithium hydroxide LiOH or lithium carbonate $Li_2O_3$ and the magnesium fluoride particles takes place. For example, the predetermined temperature is 150°C or 200°C.

[Positive electrode material]

According to an embodiment, there is a positive electrode material including the above-described positive electrode active material. Preferably, the positive electrode material is a positive electrode material for a lithium ion secondary battery. The positive electrode material includes, for example, the above-described positive electrode active material, optionally a conductive material, and optionally a binder. For example, the positive electrode material may be provided as a mixture powder of powder of the above-described positive electrode active material and powder of the conductive material, and may be provided as high viscosity composition in which the mixture powder is mixed with the binder.

The amount of the positive electrode active material included in the positive electrode material may be 80 mass% or more and 99.5 mass% or less based on the total mass of the positive electrode material. The amount of the positive electrode active material may be preferably 85 mass% or more and 98.5 mass% or less. When the amount of the positive electrode active material is within the aforementioned range, it may be possible to achieve the outstanding capacity characteristics. In contrast, when the amount of the positive electrode active material is less than the aforementioned range, the coating amount of the positive electrode increases and the thickness increases, failing to achieve sufficient volumetric energy density, and when the amount of the positive electrode active material is more than the aforementioned range, the binder and the conductive material are insufficient, resulting in low conductivity and adhesion strength of the electrode and poor battery performance.

(Conductive material)

The conductive material may include any electrically conductive material that does not cause a chemical change without limitation. Examples of the conductive material may include any one of carbon-based materials such as artificial graphite, natural graphite, carbon black, acetylene black, Ketjen black, Denka black, thermal black, channel black, furnace black, lamp black, carbon nanotubes or carbon fibers; metal powder or metal fibers of aluminum, tin, bismuth, silicon, antimony, nickel, copper, titanium, vanadium, chrome, manganese, iron, cobalt, zinc, molybdenum, tungsten, silver, gold, lanthanum, ruthenium, platinum or iridium; conductive whiskers of zinc oxide or potassium titanate; conductive metal oxide such as titanium oxide; conductive polymer such as polyaniline, polythiophene, polyacetylene, polypyrrole or polyphenylene derivatives, or a mixture thereof, but is not limited thereto. Preferably, the positive electrode material includes at least one of carbon black or carbon nanotubes as the conductive material. In particular, as demonstrated in the following embodiment, carbon nanotubes contribute to significant improvement in cycling characteristics and electrode resistance characteristics of the battery.

The amount of the conductive material may be 0.1 mass% or more and 30 mass% or less based on the total mass of the positive electrode material. The amount of the conductive material may be preferably 0.5 mass% or more and 15 mass% or less, and more preferably 0.5 mass% or more and 5 mass% or less. When the amount of the conductive material satisfies the aforementioned range, it may be possible to ensure sufficient conductivity, and the amount of the positive electrode active material does not reduce, thereby ensuring battery capacity.

(Binder)

The binder is added as the component that promotes the bonding between the active material and the conductive material or the bonding to the current collector. Examples of the binder may include any one of polyvinylidene fluoride (PVDF), polyvinyl alcohol (PVA), polyacrylonitrile, carboxymethyl cellulose (CMC), starch, hydroxypropyl cellulose, regenerated cellulose, polyvinyl pyrrolidone, tetrafluoro ethylene, polyethylene, polypropylene, ethylene-propylene-diene polymer (EPDM), sulfonated EPDM, styrene butadiene rubber (SBR), fluoro rubber, their copolymers or a mixture thereof, but is not limited thereto.

The amount of the binder may be 0.1 mass% or more and 30 mass% or less based on the total mass of the positive electrode material. The amount of the binder may be preferably 0.5 mass% or more and 15 mass% or less, and more preferably 0.5 mass% or more and 5 mass% or less. When the amount of the binder polymer satisfies the aforementioned range, it may be possible to prevent the decrease in capacity characteristics of the battery and ensure sufficient adhesion strength in the electrode.

[Method for preparing positive electrode material]

The positive electrode material may be obtained by adding the conductive material and the binder to the above-described positive electrode active material and mixing together. Optionally, any other additive may be added.

[Positive electrode active material slurry]

According to an embodiment, there is provided a positive electrode active material slurry including the above-described positive electrode active material. Preferably, the positive electrode active material slurry is a positive electrode active material slurry for a lithium ion secondary battery. The positive electrode active material slurry includes, for example, the positive electrode active material, the conductive material, the binder and a solvent. The positive electrode active material slurry may be coated on the current collector, followed by volatilization or evaporation of the solvent to form a positive electrode active material layer on the current collector. The amounts of the positive electrode active material, the conductive material and the binder in the positive electrode active material layer are the same as the foregoing description of the positive electrode material.

(Solvent)

The solvent used in the positive electrode active material slurry may include those commonly used to manufacture the positive electrode without limitation. Examples of the solvent may include any one of amine-based solvents such as N,N-dimethyl amino propyl amine, diethylene triamine or N,N-dimethyl formamide (DMF), ether-based solvents such as tetrahydrofuran, ketone-based solvents such as methyl ethyl ketone, ester-based solvents such as methyl acetate, amide-based solvents such as dimethylacetamide or 1-methyl-2-pyrrolidone (NMP), dimethylsulfoxide (DMSO) and water or a mixture thereof, but is not limited thereto.

The amount of the solvent may be such that the viscosity is enough to dissolve or disperse the positive electrode active material, the conductive material and the binder and ensure high thickness uniformity when coating on the positive electrode current collector, taking into account the coating thickness of the slurry or the manufacturing yield.

[Method for preparing positive electrode active material slurry]

The positive electrode active material slurry is obtained by adding the conductive material, the binder and the solvent to the above-described positive electrode active material and mixing together. Optionally, any other additive such as a dispersing agent or a thickening agent may be added.

[Positive electrode]

According to an embodiment, there is provided a positive electrode including a current collector, and a positive electrode active material layer including the above-described positive electrode active material on the current collector. That is, the positive electrode includes the positive electrode current collector and the positive electrode active material layer on one or two surfaces of the positive electrode current collector. The positive electrode active material layer may be formed on all or part of the surface of the positive electrode current collector. For example, the positive electrode is a positive electrode for a lithium ion secondary battery including an electrolyte solution.

(Positive electrode current collector)

The positive electrode current collector used in the positive electrode may include those having electrical and chemical stability and conductivity without limitation. For example, the positive electrode current collector may include any one of stainless steel; aluminum; nickel; titanium; or an alloy thereof, or a mixture thereof. Additionally, the positive electrode current collector may include sintered carbon, or aluminum or stainless steel treated with carbon, nickel, titanium or silver on the surface.

The positive electrode current collector may be 3 $\mu$m or more and 500 $\mu$m or less in thickness. The positive electrode current collector may have microtexture on the surface to increase the adhesion strength with the positive electrode active material. The positive electrode current collector may come in various forms, for example, film, sheet, foil, net, porous body, foam or nonwoven.

(Positive electrode active material layer)

The positive electrode active material layer includes the above-described positive electrode active material, the conductive material and the binder. The positive electrode active material layer may be, for example, 1 nm or more and 100 $\mu$m or less, 10 nm or more and 10 $\mu$m or less, or 100 nm or more and 1 $\mu$m or less in thickness. The positive electrode active material layer may be directly formed on the positive electrode current collector, or may be formed with another layer interposed between. Additionally, another layer such as a protective layer may be formed on the positive electrode active material layer.

The positive electrode active material layer may include the conductive material including carbon nanotubes. Accordingly, it may be possible to notably reduce the electrode resistance, thereby improving the electrode resistance characteristics.

[Method for manufacturing positive electrode]

The positive electrode having the positive electrode active material layer on the positive electrode current collector may be manufactured by coating the positive electrode active material slurry on the positive electrode current collector, drying and rolling.

Alternatively, for example, the positive electrode may be manufactured by casting the positive electrode active material slurry on a support, peeling a film from the support, and laminating the film onto the positive electrode current collector. Additionally, any other method may be used to form the positive electrode active material layer on the positive electrode current collector.

[Lithium ion secondary battery]

According to an embodiment, there is provided a lithium ion secondary battery including the above-described positive electrode. For example, the lithium ion secondary battery includes the above-described positive electrode, a negative electrode, a separator between the positive electrode and the negative electrode and a nonaqueous electrolyte. Meanwhile, when a solid electrolyte is used as the nonaqueous electrolyte, the separator may be omitted. The lithium ion secondary battery may include a battery case accommodating an electrode assembly including the positive electrode, the negative electrode and the separator, and optionally a sealing member that seals the battery case.

For example, in the lithium ion secondary battery, when the lithium ion secondary battery is charged and discharged to 4.2V (or 4.25V on the basis of metal lithium) for graphite as a counter electrode for one cycle, electrolyte decomposition does not occur. For example, in the lithium ion secondary battery, when the lithium ion secondary battery is charged and discharged to 4.2V for one cycle, the thickness of the corresponding lithium ion secondary battery remains substantially unchanged except for volume expansion of a negative electrode active material.

[Negative electrode]

In the lithium ion secondary battery according to an embodiment, the negative electrode includes a negative electrode current collector and a negative electrode active material layer on one or two surfaces of the negative electrode current collector. The negative electrode active material layer may be formed on all or part of the surface of the negative electrode current collector.

(Negative electrode current collector)

The negative electrode current collector used in the negative electrode may include those having electrical and chemical stability and conductivity without limitation. For example, the negative electrode current collector may include copper; stainless steel; aluminum; nickel; titanium; sintered carbon; copper or stainless steel treated with carbon, nickel, titanium or silver on the surface; an aluminum-cadmium alloy.
The negative electrode current collector may be 3 $\mu$m or more and 500 $\mu$m or less in thickness. The negative electrode current collector may have microtexture on the surface to increase the adhesion strength with the negative electrode active material. The negative electrode current collector may come in various forms, for example, film, sheet, foil, net, porous body, foam or nonwoven.

(Negative electrode active material layer)

The negative electrode active material layer includes the negative electrode active material, a binder and a conductive material. The negative electrode active material layer may be, for example, 1 nm or more and 100 $\mu$m or less, 10 nm or more and 10 $\mu$m or less, **or 100** nm or more and 1 $\mu$m or less in thickness. The negative electrode active material layer may be directly formed on the negative electrode current collector, or may be formed with another layer interposed between. Additionally, another layer such as a protective layer may be formed on the negative electrode active material layer.
The negative electrode active material layer may be, for example, formed by coating a negative electrode active material slurry on the negative electrode current collector, the negative electrode active material slurry is obtained by dissolving or dispersing a mixture of the negative electrode active material, the binder and the conductive material in a solvent, followed by drying and rolling. The mixture may further include a dispersing agent, fillers or any other additive, if necessary.

(Negative electrode active material)

The negative electrode active material may include compounds capable of reversible intercalation and deintercalation of lithium. Examples of the negative electrode active material may include any one of carbon-containing materials such as artificial graphite, natural graphite, graphitizing carbon fibers or amorphous carbon; silicon-containing materials such as silicon powder, amorphous silicon, silicon nanofibers or silicon nanowires; silicon compounds such as silicon alloys, silicon oxide, silicon oxide doped with alkali metal or alkaline earth metal (lithium or magnesium); metallic materials that can form alloys with lithium such as Al, Sn, Pb, Zn, Bi, In, Mg, Ga, Cd, Sn alloys, Al alloys; metal oxide capable of lithium doping and dedoping such as $SnO_2$, vanadium oxide or lithium vanadium oxide; composites of silicon-containing materials and carbon-containing materials or Sn-C composites, or a mixture thereof, but is not limited thereto. Meanwhile, the carbon-containing material may include any one of low-crystallinity carbon or high-crystallinity carbon. The low-crystallinity carbon may typically include soft carbon and hard carbon, and the high-crystallinity carbon may typically include high temperature sintered carbon such as amorphous, platy, flaky, spherical or fibrous natural graphite or artificial graphite, Kish graphite, pyrolytic carbon, mesophase pitch-based carbon fibers, mesocarbon microbeads, mesophase pitch or petroleum·coal-based coke.
The negative electrode active material may be included in an amount of 80 mass% or more and 99 mass% or less based on the total mass of the negative electrode active material layer.

(Binder and the conductive material)

The type and amount of the binder and the conductive material used in the negative electrode active material slurry are the same as the description of the positive electrode.

(Solvent)

The solvent used in the negative electrode active material slurry may include those commonly used to manufacture the negative electrode without limitation. Examples of the solvent may include any one of N-methyl-2-pyrrolidone (NMP), dimethylsulfoxide (DMSO), isopropyl alcohol, acetone and water or a mixture thereof, but is not limited thereto.

[Method for manufacturing negative electrode]

A method for manufacturing the negative electrode for the lithium ion secondary battery according to an embodiment may include the steps of dissolving or dispersing the negative electrode active material, and optionally the binder and the conductive material in the solvent to obtain the negative electrode active material slurry, and in the same way as the method for manufacturing the positive electrode, coating the negative electrode active material slurry on the negative electrode current collector to form the negative electrode active material layer on the negative electrode current collector in order to obtain the negative electrode.

[Separator]

In the lithium ion secondary battery according to an embodiment, the separator separates the negative electrode from the positive electrode and provides a movement passage of lithium ions, and may include those commonly used as separators in lithium ion secondary batteries without limitation. In particular, separators having low resistance to migration of electrolyte ions and high electrolyte wettability are preferred. For example, the separator may include porous polymer films made from polyolefin-based polymer such as ethylene homopolymer, propylene homopolymer, ethylene/butane copolymer, ethylene/hexane copolymer, ethylene/methacrylate copolymer or a stack structure of two or more layers of them. Additionally, commonly used porous nonwoven fabrics, for example, nonwoven fabrics made of high melting point glass fibers or polyethylene terephthalate fibers may be used. Additionally, to ensure heat resistance or mechanical strength, separators coated with ceramics or polymer materials may be used.

[Nonaqueous electrolyte]

In the lithium ion secondary battery according to an embodiment, the nonaqueous electrolyte may include an organic liquid electrolyte or an inorganic liquid electrolyte that may be used to manufacture the lithium ion secondary battery, but is not limited thereto. For example, a solid electrolyte may be also used.

The nonaqueous electrolyte may include an organic solvent and a lithium salt, and optionally, may further include an electrolyte additive. Hereinafter, the liquid electrolyte is referred to as an 'electrolyte solution'.

The organic solvent may include those that may act as a medium for the movement of ions involved in the electrochemical reaction of the battery without limitation. Examples of the organic solvent may include any one of ester-based solvents such as methyl acetate, ethyl acetate, $\gamma$-butyrolactone or $\varepsilon$-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethyl carbonate (DMC), diethyl carbonate (DEC), methyl ethyl carbonate (MEC), ethyl methyl carbonate (EMC), ethylene carbonate (EC) or propylene carbonate (PC); alcohol-based solvents such as ethyl alcohol or isopropyl alcohol; nitrile-based solvents of R-CN (R is C2-C20 straight-chain, branched-chain or cyclic hydrocarbon, and may comprise an exocyclic double bond or ether bond); amide-based solvents such as dimethyl formamide; dioxolane-based solvents such as 1,3-dioxolane; and sulfolane-based solvents or a mixture thereof, but is not limited thereto. In particular, the carbonate-based solvent may be preferred, and more preferably, the cyclic carbonate (for example, ethylene carbonate or propylene carbonate) having high ionic conductivity and high dielectric constant, contributing to the improved charge/discharge performance of the battery may be mixed with the low viscosity straight-chain carbonate-based compound (for example, ethyl methyl carbonate, dimethyl carbonate or diethyl carbonate). In this case, the cyclic carbonate and the straight-chain carbonate may be mixed at a volume ratio of about 1:1 to 1:9 to further increase the electrolyte performance.

The lithium salt may include any compound that can provide lithium ions used in the lithium ion secondary battery without limitation. Examples of the lithium salt may include any one of $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$ or $LiB(C_2O_4)_2$ or a mixture thereof, but is not limited thereto. The lithium salt may be, for example, included in the electrolyte at the concentration of 0.1 mol/L or more and 2 mol/L or less. When the concentration of the lithium salt is included in the aforementioned range, the electrolyte has the optimum conductivity and viscosity, leading to the outstanding electrolyte performance and effective movement of lithium ions.

The electrolyte additive may be optionally used to improve battery life characteristics, suppress battery capacity reduction and improve battery discharge capacity. Examples of the electrolyte additive may include any one of haloalkylene carbonate-based compounds such as vinylene carbonate (VC), fluoro ethylene carbonate (FEC) or difluoro ethylene carbonate (DFEC), pyridine, triethylphosphite, triethanol amine, cyclic ether, ethylene diamine, n-glyme, hexa phosphoric triamide, nitrobenzene derivatives, sulfur, quinoneimine dyes, N-substituted oxazolidinone, N,N-substituted imidazolidine, ethyleneglycol dialkylether, ammonium salts, pyrrole, 2-methoxy ethanol or aluminum trichloride or a mixture thereof, but is not limited thereto. The electrolyte additive may be, for example, included in an amount of 0.1 mass% or more and 15 mass% or less based on the total mass of the electrolyte.

[Method for manufacturing lithium ion secondary battery]

The lithium ion secondary battery according to an embodiment may be manufactured by placing the separator (for example, a separation membrane) and the electrolyte solution between the positive electrode manufactured as described above and the negative electrode manufactured as described above. More specifically, the lithium ion secondary battery may be manufactured by forming the electrode assembly including the positive electrode and the negative electrode and the separator between the positive electrode and the negative electrode, placing the electrode assembly in the battery case, for example, a cylindrical or prismatic battery case and injecting the electrolyte. Alternatively, the lithium ion secondary battery may be manufactured by stacking the electrode assembly, filling it with the electrolyte, placing the obtained resultant product in the battery case and sealing the battery case.

The battery case may include those commonly used in the art. The battery case may have, for example, a cylindrical, prismatic, pouch-like or coin-like shape using a can.

The lithium ion secondary battery according to an embodiment may be used as a power source of small devices as well as a unit battery of a medium- and large-scale battery module including a plurality of battery cells. Preferred examples of the medium- and large-scale device may include electric vehicles, hybrid electric vehicles, plug-in hybrid electric vehicles and energy storage systems, but is not limited thereto.

(Example)

Hereinafter, the present disclosure will be described by an experimental example. However, the present disclosure is not limited to the following experimental example.

[Example 1-1]

(Preparation of positive electrode active material)

Based on 100 parts by mass of $LiNi_{0.8}Co_{0.1}Mn_{0.1}O_2$ (hereinafter, referred to as 'lithium transition metal oxide') powder, 0.1 parts by mass of magnesium fluoride ($MgF_2$; Stella Chemifa) powder was added and filled in a plastic bottle. The powders were mixed at 700 rpm for about 30 minutes using a rocking mill (Seiwa Giken, RM-01) to obtain a mixture of lithium transition metal oxide and magnesium fluoride as a positive electrode active material. From the observation of the powder particles of the raw materials and the powder particles of the mixture with a scanning electron microscope (SEM), it was confirmed that secondary particle form such as grain size or cracks was common in them.

(Preparation of positive electrode active material slurry)

Subsequently, 96.5 parts by mass of the positive electrode active material, 1.5 parts by mass of carbon black as a conductive material, 2.0 parts by mass of polyvinylidene fluoride (PVDF) as a binder and N-methyl-2-pyrrolidone (NMP) as a solvent were mixed together to obtain a positive electrode active material slurry.

(Preparation of positive electrode sheet)

Subsequently, the obtained positive electrode active material slurry was coated on a 20 $\mu$m thick aluminum foil to a thickness of about 70 $\mu$m, and dried at 130°C to obtain a positive electrode sheet.

(Preparation electrolyte solution)

Ethylene carbonate, dimethyl carbonate and diethyl carbonate were mixed at a volume ratio of 1:2:1, 1 mol/L of $LiPF_6$ was dissolved in the mixture and 2.0 mass% of vinylene carbonate (VC) was added to obtain an electrolyte solution.

(Manufacture of coin cell battery)

The obtained positive electrode sheet was punched into a circular shape having a diameter of 13 mm to obtain a positive electrode for a coin cell. The obtained positive electrode, a 0.3 mm thick metal lithium negative electrode and the electrolyte solution were used to manufacture a CR2016 type coin cell battery.

(Manufacture of monocell battery)

Aside from the coin cell, the obtained positive electrode sheet was punched into a rectangular shape having a size of 30mm×42mm to obtain a positive electrode for a monocell, a graphite negative electrode of 31mm×43mm and the electrolyte solution were used to manufacture a monocell battery.

[Example 1-2]

A monocell battery was manufactured in the same way as Example 1-1, except that a mixture of carbon black and carbon nanotubes (CNT) (1.5 parts by mass) was used as the conductive material rather than carbon black.

[Example 1-3]

A coin cell battery was manufactured in the same way as Example 1-1, except that the amount of magnesium fluoride added was 0.25 mass%.

[Example 1-4]

A coin cell battery was manufactured in the same way as Example 1-1, except that the amount of magnesium fluoride added was 1.0 mass%.

[Comparative Example 1-1]

A coin cell battery and a monocell battery were manufactured in the same way as Example 1-1, except that the process of adding magnesium fluoride was omitted. That is, magnesium fluoride was not added, and $LiNi_{0.8}Co_{0.1}Mn_{0.1}O_2$ as it stands was used as the positive electrode active material.

[Comparative Example 1-2]

A monocell battery was manufactured in the same way as Example 1-2, except that the process of adding magnesium fluoride was omitted.

[Comparative Example 2-1]

A monocell battery was manufactured in the same way as Example 1-1, except that lithium transition metal oxide was mixed with magnesium fluoride, after increasing the temperature to 350°C, the obtained mixture was sintered at 350°C for 5 hours in air, and the temperature reduced down to room temperature. That is, a sintered product obtained by sintering the positive electrode active material of Example 1-1 was used as the positive electrode active material.

[Comparative Example 2-2]

A monocell battery was manufactured in the same way as Example 1-2, except that the same sintering process as Comparative Example 2-1 was added.
TABLE 1 summarizes the manufacturing conditions of Example and Comparative Example.

[TABLE 1]

|  |  | Magnesium fluoride | Sintering | Conductive material |
|---|---|---|---|---|
| Example | 1-1 | added | - | carbon black |
|  | 1-2 | added | - | carbon black+CNT |

(continued)

|  |  | Magnesium fluoride | Sintering | Conductive material |
|---|---|---|---|---|
| Comparative Example | 1-1 | - | - | carbon black |
|  | 1-2 | - | - | carbon black+CNT |
|  | 2-1 | added | 350°C, 5h | carbon black |
|  | 2-2 | added | 350°C, 5h | carbon black+CNT |

[Evaluation example 1: X-ray photoelectron spectroscopy (XPS) measurement of positive electrode active material]

The positive electrode active materials obtained in Example 1-1, Comparative Example 1-1 and Comparative Example 2-1 were measured using X-ray photoelectron spectroscopy (XPS). The sample to be analyzed is the positive electrode active material in solid state before preparing the positive electrode active material slurry, after sintering. Below are detailed conditions.

-Sample

The positive electrode active material powder fixed to an indium foil was measured. The process from powder sampling to transfer to the machine was performed under an argon atmosphere.

-Measurement conditions

Machine: Quantera SXM (Ulvac-PHI)
Excitation X-ray: monochromatic Al K1, 2 ray(1486.6 eV)
X-ray penetration: 200 $\mu$m
Photoelectron detection angle: 45°(a slope of the detector with respect to the sample surface)

- Data processing

Smoothing: 9-point smoothing
Horizontal axis correction: C1s main peak (CHx, C-C) at 284.6 eV.

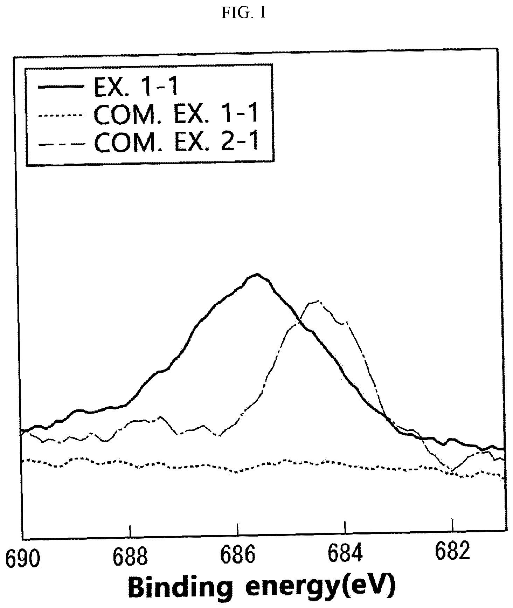

FIG. 1 shows 1s electron XPS spectra for fluorine of the positive electrode active materials according to Example 1-1, Comparative Example 1-1 and Comparative Example 2-1.
As shown in FIG. 1, in the positive electrode active material of Example 1-1 in which magnesium fluoride was added but sintering was not performed, a1s electron derived peak of fluorine having the peak top near 685.5 eV in a range between 684 eV and 688 eV was observed. In contrast, in the positive electrode active material of Comparative Example 2-1 in which magnesium fluoride was added and sintering was performed, a 1s electron derived peak of fluorine having the peak top near 684.3 eV in a range between 683 eV and 685 eV was observed. In the positive electrode active material of Comparative Example 1-1 in which magnesium fluoride was not added, a 1s electron derived peak of fluorine was not observed.

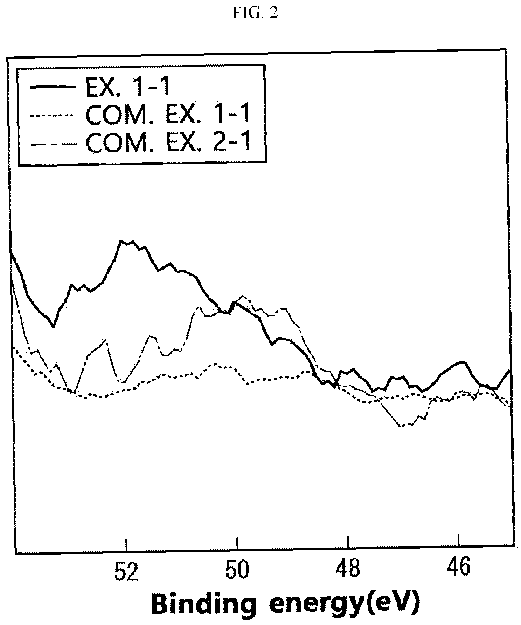

FIG. 2 shows 2p electron XPS spectra for magnesium of the positive electrode active materials according to Example 1-1, Comparative Example 1-1 and Comparative Example 2-1. As shown in FIG. 2, in the positive electrode active material of Example 1-1 in which magnesium fluoride was added but sintering was not performed, a 2p electron derived peak of magnesium having the peak top near 51.0 eV in a range between 50 eV and 52 eV was observed. In contrast, in the positive electrode active material of Comparative Example 2-1 in which magnesium fluoride was added and sintering was performed, a 2p electron derived peak of magnesium having the peak top near 49.3 eV in a range between 48 eV and 50 eV was observed. In the positive electrode active material of Comparative Example 1-1 in which magnesium fluoride was not added, a 2p electron derived peak of magnesium was not observed.
The peak position near 685.5 eV observed in Example 1-1 corresponds to 1s electron peak position of fluorine in the raw material, magnesium fluoride $MgF_2$. In contrast, the peak position near 684.3 eV observed in Comparative Example 2-1 is close to the 1s electron peak position of fluorine in the other compound such as sodium fluoride NaF.

Likewise, the peak position near 51.0 eV observed in Example 1-1 corresponds to the 2p electron peak position of magnesium in the raw material, magnesium fluoride MgF2. In contrast, the peak position near 49.3 eV observed in Comparative Example 2-1 is close to the 2p electron peak position of magnesium in the other compound such as magnesium hydroxide Mg(OH)2. From these results, it is presumed that in Example 1-1 in which the lithium transition metal oxide and the magnesium fluoride were simply mixed, the electron state and chemical state of the raw material, magnesium fluoride did not change. On the other hand, it is presumed that in Comparative Example 2-1 in which the mixture of lithium transition metal oxide and magnesium fluoride was sintered, the chemical state was changed by the decomposition of the raw material, magnesium fluoride.

[Evaluation example 2: Capacity retention of monocell battery]

For each monocell battery manufactured by each Example and each Comparative Example, at 25°C, ageing was performed at the charge rate of 0.1C and the discharge rate of 0.1C. Subsequently, in a constant temperature tank maintained at 45°C, charging and discharging was repeated at the charge rate of 0.3C and the discharge rate of 0.3C for 300 cycles, within the upper limit of charge voltage of 4.2V and the lower limit of discharge voltage of 2.5V. On the other hand, every 50 cycles, charging and discharge was performed at the charge rate of 0.1C and the discharge rate of 0.1C. From the discharge capacity in each charge/discharge cycle, capacity retention in the n-th charge/discharge cycle defined as the following equation was calculated.

【Equation 1】

$$\text{Capacity retention (\%)} = \frac{\text{Discharge capacity in n-th charge and discharge cycle}}{\text{Discharge capacity in first charge and discharge cycle}} \times 100\%$$

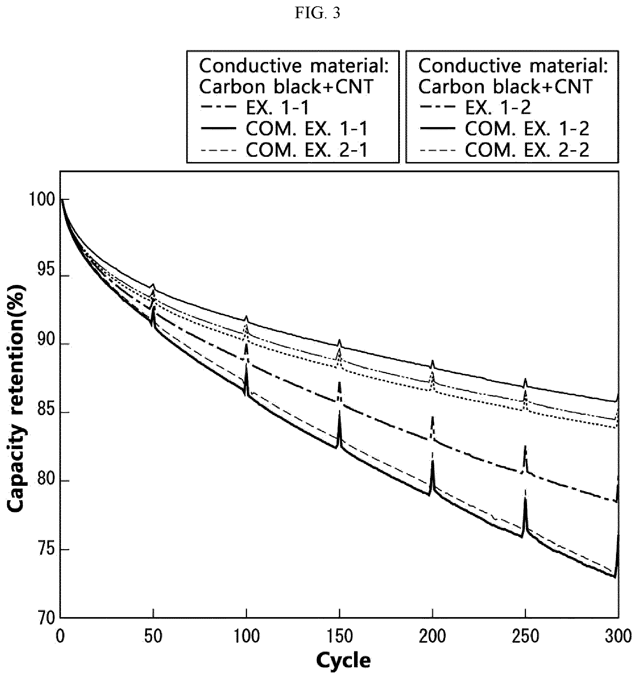

FIG. 3 is a diagram showing a trend of battery capacity change during first to 300th charging and discharging by plotting the above-defined capacity retention as a function of the number of charge/discharge cycles for each monocell battery of each Example and each Comparative Example. For each Example and each Comparative Example, capacity retention in the first cycle was 100%.

As shown in FIG. 3, when comparing Example 1-1, Comparative Example 1-1 and Comparative Example 2-1 using only carbon black as the conductive material, it was confirmed that battery capacity fading in Example 1-1 was significantly suppressed. It was confirmed from the comparison of Example 1-1 with Comparative Example 1-1 that the addition of magnesium fluoride (without sintering) improved the cycling characteristics. From the comparison of Example 1-1 with Comparative Example 2-1, it was confirmed that the non-sintered mixture of lithium transition metal oxide and magnesium fluoride as the positive electrode active material (Example 1-1) had the improved cycling characteristics than the sintered mixture of the lithium transition metal oxide and the magnesium fluoride (Comparative Example 2-1). The cycling characteristics of Comparative Example 2-1 in which sintering was performed were slightly better than Comparative Example 1-1 in which magnesium fluoride was not added.

When comparing the capacity at the charge and discharge current rate of 0.1C every 50 cycles with the capacity at the current rate 0.3C in the common charge and discharge cycles, a capacity difference (i.e., in FIG. 3, the height of spike-shaped peak found every 50 cycles) was smallest in Example 1-1, and largest in Comparative Example 1-1. That is, the positive electrode active material obtained by adding magnesium fluoride and non-sintering was found as effective even in high rate cycles, compared to the positive electrode active material in which magnesium fluoride was not added or magnesium fluoride was added and sintering was performed.

It was confirmed that Example 1-2, Comparative Example 1-2 and Comparative Example 2-2 using carbon black and carbon nanotubes (CNT) as the conductive material, had a significant improvement in cycling characteristics, compared to the use of only carbon black as the conductive material. When comparing Example 1-2, Comparative Example 1-2 and Comparative Example 2-2, it was confirmed that in Example 1-2 in which magnesium fluoride was added but sintering was not performed, capacity fading of the battery was significantly suppressed. As shown in FIG. 3, it was confirmed that the addition of magnesium fluoride and non-sintering contributed to the improved cycling characteristics. This is the same tendency as Example 1-1, Comparative Example 1-1 and Comparative Example 2-1. It was confirmed that a difference between capacity during charging and discharging at the current rate of 0.1C and capacity during charging and discharging at the current rate of 0.3C had the same tendency as Example 1-1, Comparative Example 1-1 and Comparative Example 2-1.

[Evaluation example 3: Change in direct current resistance]

For each of Example 1-1, Comparative Example 1-1 and Comparative Example 2-1, in each cycle of the repeated charge/discharge process of Evaluation example 2, direct current resistance (DCR) of the monocell battery was measured. Specifically, direct current resistance was calculated from a slope of a straight line formed by linear approximation of a discharge curve obtained from voltage values at a predetermined interval for 60 seconds immediately from the start of discharge after the battery was fully charged by completing the charging process.

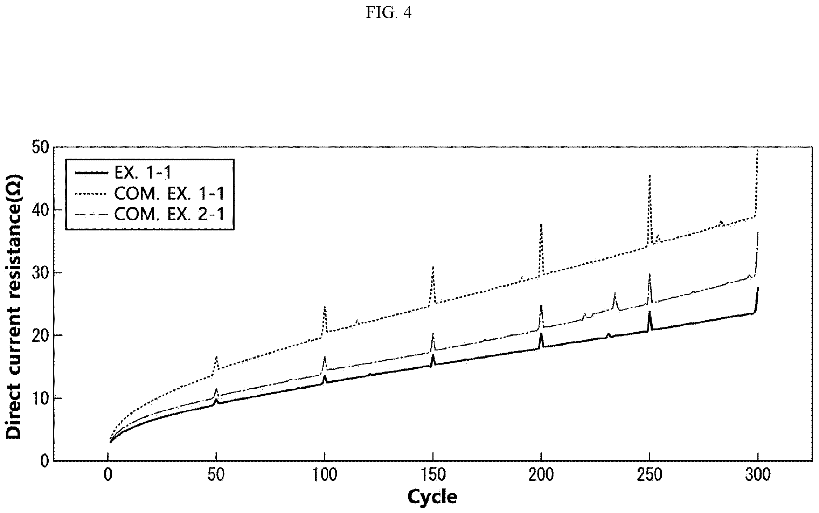

FIG. 4 is a diagram showing a trend of direct current resistance of the battery over the first to 300th charge/discharge cycles, by plotting the direct current resistance in Example 1-1, Comparative Example 1-1 and Comparative Example 2-1 as a function of the number of charge/discharge cycles. As shown in FIG. 4, it was confirmed that in Example 1-1 and Comparative Example 2-1 in which magnesium fluoride was added, the increase in direct current resistance over the repeated charge and discharge was suppressed, compared with Comparative Example 1-1 in which magnesium fluoride was not added. When comparing Example 1-1 with Comparative Example 2-1, it was confirmed that in Example 1-1 in which sintering was not performed, the increase in direct current resistance was suppressed, compared to Comparative Example 2-1.

[Evaluation example 4: Capacity retention of coin cell battery]

For each coin cell battery manufactured in Example 1-1, Example 1-3, Example 1-4 and Comparative Example 1-1, the trend of capacity retention was investigated in the same way as Evaluation example 2. Specifically, when initial discharge capacity (mAh/g; the mass of magnesium fluoride was ignored when calculating), i.e., discharge capacity in the first charge/discharge cycle is 100%, capacity retention in the 30th charge/discharge cycle and 50th charge/discharge cycle was calculated. In both 30th cycle and 50th cycle, all the capacity retention of Example 1-1, Example 1-3 and Example 1-4 was greater than the capacity retention of Comparative Example 1-1. The following TABLE 2 summarizes differences obtained by subtracting the capacity retention of Comparative Example 1-1 from the capacity retention of each of Example 1-1, Example 1-3 and Example 1-4. As described above, it was confirmed that all Examples, in which magnesium fluoride was added, had higher capacity retention than Comparative Example 1-1 in which magnesium fluoride was not added.

[TABLE 2]

| | Magnesium fluoride | Difference in capacity retention compared to Comparative Example 1-1 | |
|---|---|---|---|
| | | 30th cycle | 50th cycle |
| Example 1-1 | 0.1 mass% | +0.7% | +2.2% |
| Example 1-3 | 0.25 mass% | +0.2% | +0.7% |
| Example 1-4 | 1.0 mass% | +0.6% | +2% |

**Claims**

1. A positive electrode active material including a mixture of lithium transition metal oxide particles and magnesium fluoride particles,
   wherein a 1s electron spectrum for fluorine observed by X-ray photoelectron spectroscopy analysis has a peak at 685 eV or more and 687 eV or less.

2. The positive electrode active material according to claim 1, wherein the lithium transition metal oxide particles do not have a thin film of the magnesium fluoride.

3. The positive electrode active material according to claim 1 or 2, wherein the magnesium fluoride particles are not sintered with the lithium transition metal oxide particles.

4. The positive electrode active material according to claim 1 or 2, wherein the magnesium fluoride particles are included in an amount of 0.02 parts by mass or more and 1 part by mass or less based on 100 parts by mass of the lithium transition metal oxide particles.

5. The positive electrode active material according to claim 1 or 2, wherein the lithium transition metal oxide includes nickel.

6. The positive electrode active material according to claim 1 or 2, wherein the lithium transition metal oxide is represented by $Li_aNi_xM_yO_2$ (0 < a≤1.05, x+y=1, 0.4≤x≤1, M is at least one type of metal other than Ni).

7. The positive electrode active material according to claim 1 or 2, wherein when comparing a first lithium ion secondary battery manufactured using a positive electrode including a positive electrode active material layer including 96.5 parts by mass of the positive electrode active material, 1.5 parts by mass of carbon black and 2 parts by mass of polyvinylidene fluoride on a current collector and a negative electrode including graphite with a second lithium ion secondary battery manufactured in a same condition as the first lithium ion secondary battery except that a positive electrode active material obtained by sintering the positive electrode active material at 350°C for 5 hours was used instead of the positive electrode active material, the first lithium ion secondary battery has a larger value obtained by dividing a discharge capacity in a 100th charge/discharge cycle by a discharge capacity in a first charge/discharge cycle than the second lithium ion secondary battery.

8. A positive electrode active material slurry including the positive electrode active material defined in claim 1 or 2.

9. A positive electrode comprising:

   a current collector, and
   a positive electrode active material layer including the positive electrode active material defined in claim 1 or 2 on the current collector.

10. A lithium ion secondary battery comprising the positive electrode defined in claim 9.

11. A method for preparing a positive electrode active material, comprising:

    mixing lithium transition metal oxide particles with magnesium fluoride particles,
    wherein a 1s electron spectrum for fluorine observed by X-ray photoelectron spectroscopy analysis of the positive electrode active material has a peak at 685 eV or more and 687 eV or less.

12. The method for preparing the positive electrode active material according to claim 11, wherein the method does not include sintering a mixture of the lithium transition metal oxide particles and the magnesium fluoride particles.

13. The method for preparing the positive electrode active material according to claim 11 or 12, wherein the positive electrode active material includes the mixture of the lithium transition metal oxide particles and the magnesium fluoride particles.

FIG. 1

FIG. 2

FIG. 3

FIG. 4

# EP 4 571 880 A1

## INTERNATIONAL SEARCH REPORT

| International application No. |
| --- |
| **PCT/KR2024/000143** |

| A. | CLASSIFICATION OF SUBJECT MATTER |
| --- | --- |

**H01M 4/36**(2006.01)i; **H01M 4/525**(2010.01)i; **H01M 4/505**(2010.01)i; **H01M 4/46**(2006.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01G 51/00(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 불화물(fluoride), X선광전자분석(X-ray photoelectron spectroscopy; XPS), 전이금속(transition metal), 산화물(oxide)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2022-153404 A (SEMICONDUCTOR ENERGY LAB CO., LTD.) 12 October 2022 (2022-10-12)<br>See claims 1-10. | 1-13 |
| A | JP 2021-007100 A (SEMICONDUCTOR ENERGY LAB CO., LTD.) 21 January 2021 (2021-01-21)<br>See claim 1. | 1-13 |
| A | KR 10-2016-0052170 A (SAMSUNG SDI CO., LTD.) 12 May 2016 (2016-05-12)<br>See claims 1-10. | 1-13 |
| A | JP 2021-051830 A (TAIHEIYO CEMENT CORP.) 01 April 2021 (2021-04-01)<br>See claims 1-7. | 1-13 |
| A | KR 10-2015-0063955 A (L&F MATERIAL CO., LTD.) 10 June 2015 (2015-06-10)<br>See claims 1-17. | 1-13 |

| ☐ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **12 April 2024** | **15 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/000143**

| Patent document cited in search report | | | Publication date (day/month/year) | Patent family member(s) | | | Publication date (day/month/year) |
|---|---|---|---|---|---|---|---|
| JP | 2022-153404 | A | 12 October 2022 | CN | 109792049 | A | 21 May 2019 |
| | | | | CN | 109792049 | B | 14 March 2023 |
| | | | | CN | 111446424 | A | 24 July 2020 |
| | | | | CN | 111446424 | B | 09 June 2023 |
| | | | | CN | 111446425 | A | 24 July 2020 |
| | | | | CN | 111446425 | B | 05 September 2023 |
| | | | | CN | 115188931 | A | 14 October 2022 |
| | | | | CN | 115188932 | A | 14 October 2022 |
| | | | | CN | 116154269 | A | 23 May 2023 |
| | | | | CN | 116387601 | A | 04 July 2023 |
| | | | | CN | 116387602 | A | 04 July 2023 |
| | | | | CN | 116387603 | A | 04 July 2023 |
| | | | | CN | 116435580 | A | 14 July 2023 |
| | | | | CN | 116454360 | A | 18 July 2023 |
| | | | | DE | 112017005164 | T5 | 25 July 2019 |
| | | | | DE | 202017007622 | U1 | 13 September 2023 |
| | | | | DE | 202017007644 | U1 | 19 December 2023 |
| | | | | DE | 202017007645 | U1 | 19 December 2023 |
| | | | | JP | 2018-190700 | A | 29 November 2018 |
| | | | | JP | 2020-031071 | A | 27 February 2020 |
| | | | | JP | 2020-043089 | A | 19 March 2020 |
| | | | | JP | 2023-063610 | A | 09 May 2023 |
| | | | | JP | 2023-072004 | A | 23 May 2023 |
| | | | | JP | 2023-096104 | A | 06 July 2023 |
| | | | | JP | 2023-101598 | A | 21 July 2023 |
| | | | | JP | 2023-123835 | A | 05 September 2023 |
| | | | | JP | 2023-157994 | A | 26 October 2023 |
| | | | | JP | 7088898 | B2 | 21 June 2022 |
| | | | | JP | 7198193 | B2 | 28 December 2022 |
| | | | | KR | 10-2019-0065324 | A | 11 June 2019 |
| | | | | KR | 10-2020-0000489 | A | 02 January 2020 |
| | | | | KR | 10-2022-0038809 | A | 29 March 2022 |
| | | | | KR | 10-2022-0038810 | A | 29 March 2022 |
| | | | | KR | 10-2023-0066123 | A | 12 May 2023 |
| | | | | KR | 10-2023-0098921 | A | 04 July 2023 |
| | | | | KR | 10-2023-0101939 | A | 06 July 2023 |
| | | | | KR | 10-2392937 | B1 | 03 May 2022 |
| | | | | KR | 10-2398195 | B1 | 17 May 2022 |
| | | | | KR | 10-2530225 | B1 | 08 May 2023 |
| | | | | US | 11094927 | B2 | 17 August 2021 |
| | | | | US | 2018-0102536 | A1 | 12 April 2018 |
| | | | | US | 2020-0106093 | A1 | 02 April 2020 |
| | | | | US | 2021-0305553 | A1 | 30 September 2021 |
| | | | | US | 2022-0199983 | A1 | 23 June 2022 |
| | | | | US | 2022-0285673 | A1 | 08 September 2022 |
| | | | | US | 2023-0299274 | A1 | 21 September 2023 |
| | | | | US | 2023-0327088 | A1 | 12 October 2023 |
| | | | | WO | 2018-069799 | A1 | 19 April 2018 |
| JP | 2021-007100 | A | 21 January 2021 | CN | 110337744 | A | 15 October 2019 |
| | | | | CN | 111933906 | A | 13 November 2020 |

Form PCT/ISA/210 (patent family annex) (July 2022)

## INTERNATIONAL SEARCH REPORT
### Information on patent family members

| International application No. |
|---|
| **PCT/KR2024/000143** |

| Patent document cited in search report | | | Publication date (day/month/year) | Patent family member(s) | | | Publication date (day/month/year) |
|---|---|---|---|---|---|---|---|
| | | | | CN | 112201844 | A | 08 January 2021 |
| | | | | EP | 3646402 | A1 | 06 May 2020 |
| | | | | EP | 3783707 | A1 | 24 February 2021 |
| | | | | JP | 2019-179758 | A | 17 October 2019 |
| | | | | JP | 2020-021742 | A | 06 February 2020 |
| | | | | JP | 2020-024942 | A | 13 February 2020 |
| | | | | JP | 2020-123575 | A | 13 August 2020 |
| | | | | JP | 2020-145202 | A | 10 September 2020 |
| | | | | JP | 2020-205274 | A | 24 December 2020 |
| | | | | JP | 2023-033449 | A | 10 March 2023 |
| | | | | JP | 6741385 | B2 | 19 August 2020 |
| | | | | JP | 6924245 | B2 | 25 August 2021 |
| | | | | JP | 6995953 | B2 | 04 February 2022 |
| | | | | JP | 7213845 | B2 | 27 January 2023 |
| | | | | JP | 7213853 | B2 | 27 January 2023 |
| | | | | KR | 10-2020-0023409 | A | 04 March 2020 |
| | | | | KR | 10-2020-0096703 | A | 12 August 2020 |
| | | | | KR | 10-2020-0118246 | A | 14 October 2020 |
| | | | | KR | 10-2020-0119888 | A | 20 October 2020 |
| | | | | KR | 10-2023-0146129 | A | 18 October 2023 |
| | | | | KR | 10-2223712 | B1 | 04 March 2021 |
| | | | | KR | 10-2529616 | B1 | 04 May 2023 |
| | | | | KR | 10-2529620 | B1 | 04 May 2023 |
| | | | | KR | 10-2588500 | B1 | 11 October 2023 |
| | | | | TW | 201907608 | A | 16 February 2019 |
| | | | | TW | 202013791 | A | 01 April 2020 |
| | | | | TW | 202044655 | A | 01 December 2020 |
| | | | | TW | 202118125 | A | 01 May 2021 |
| | | | | TW | 202121719 | A | 01 June 2021 |
| | | | | TW | I725899 | B | 21 April 2021 |
| | | | | TW | I794681 | B | 01 March 2023 |
| | | | | TW | I797137 | B | 01 April 2023 |
| | | | | US | 11670770 | B2 | 06 June 2023 |
| | | | | US | 2020-0176770 | A1 | 04 June 2020 |
| | | | | US | 2021-0020935 | A1 | 21 January 2021 |
| | | | | US | 2021-0028456 | A1 | 28 January 2021 |
| | | | | WO | 2019-003025 | A1 | 03 January 2019 |
| KR | 10-2016-0052170 | A | 12 May 2016 | KR | 10-2307907 | B1 | 01 October 2021 |
| | | | | US | 2016-0126542 | A1 | 05 May 2016 |
| | | | | US | 2019-0051895 | A1 | 14 February 2019 |
| JP | 2021-051830 | A | 01 April 2021 | JP | 7389598 | B2 | 30 November 2023 |
| KR | 10-2015-0063955 | A | 10 June 2015 | KR | 10-1646911 | B1 | 09 August 2016 |
| | | | | US | 10141567 | B2 | 27 November 2018 |
| | | | | US | 2016-0276659 | A1 | 22 September 2016 |
| | | | | WO | 2015-083901 | A1 | 11 June 2015 |

Form PCT/ISA/210 (patent family annex) (July 2022)

**EP 4 571 880 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023001342 A
- JP 2018063835 A